# FASCICULE DE BREVET EUROPEEN

(11) **EP 3 814 655 B1**
(45) Date de publication et mention de la délivrance du brevet: **29.06.2022**
(21) Numéro de dépôt: 19742293.4
(22) Date de dépôt: 25.06.2019
(51) Int. Cl.: F16H 7/12

(54) **TENDEUR DE COURROIE**
RIEMENSPANNER
BELT TENSIONER

(30) Priorité: 29.06.2018 FR 1855974
(43) Date de publication de la demande: 05.05.2021
(73) Titulaire: HUTCHINSON, 75008 Paris (FR)
(72) Inventeur: AUBERTIN, Yannick, 37520 LA RICHE (FR); DEPLAIS, Fabien, 37530 POCE SUR CISSE (FR); THIBAULT, Philippe, 37130 BREHEMONT (FR)
(74) Mandataire: Gevers & Orès
(86) Numéro de dépôt international: PCT/EP2019/066896
(87) Numéro de publication internationale: WO 2020/002364

(56) Documents cités:
- EP-A1- 0 926 396
- EP-A1- 1 022 487
- CN-A- 101 429 983

## Description

La présente invention se rapporte à un tendeur de courroie, notamment pour une courroie automobile.

Dans une application automobile, le moteur à combustion interne comporte habituellement une ou plusieurs courroies de transmission dont la tension est assurée par un ou plusieurs tendeurs.

Un tendeur comporte typiquement, à une première extrémité, une platine destinée à être solidarisée au bloc moteur et, à une deuxième extrémité soit un galet soit un bras articulé équipé d'un galet. Le galet est monté à rotation par rapport au reste du tendeur et est destiné à venir au contact de la courroie pour tendre ou détendre celle-ci en fonction des conditions de fonctionnement du moteur.

Entre les deux extrémités, le tendeur comporte une première chambre remplie ou destinée à être remplie par un fluide, une deuxième chambre entourant la première chambre, les deux chambres communiquant entre elles par l'intermédiaire d'un ou plusieurs orifices.

La première chambre est munie d'un piston apte à se déplacer dans la chambre. Le piston est relié à la platine par une première extrémité et sa deuxième extrémité, opposée à la première extrémité, est au contact ou destinée à être au contact du fluide. Le ou chaque orifice est agencé entre la deuxième extrémité du piston et le fond de la première chambre.

Un moyen de rappel élastique, par exemple un ressort hélicoïdal, est généralement prévu à l'extérieur de la première chambre, entre les deux extrémités du tendeur.

Plus précisément, le moyen de rappel élastique peut être intégré à un moyen étanche, par exemple réalisé en élastomère, pour former une deuxième chambre entre le ressort et la première chambre. En variante, la deuxième chambre est formée par une chemise entourant la première chambre. Dans ce cas, le moyen de rappel élastique peut être prévu à l'intérieur ou à l'extérieur de la deuxième chambre.

En phase de compression, le déplacement du piston vers le fond de la chambre assure une montée en pression du fluide contenu dans la chambre.

Cette montée en pression se traduit par une mise sous tension plus importante de la courroie.

En phase de détente, le déplacement du piston à l'opposé du fond de la chambre assure une chute en pression du fluide contenu dans la chambre.

Cette chute de pression se traduit par une mise sous tension moins importante de la courroie. Le moyen de rappel élastique apporte une contribution lors de cette phase de détente afin d'aider à la remontée du piston dans la chambre. En effet, le moyen de rappel élastique permet d'imposer un effort quasi constant, donnant alors une tension minimum à la courroie, nécessaire au fonctionnement en dehors des phases dynamiques moteur.

La performance du tendeur, et notamment la force maximale qui peut être générée par le tendeur sur la courroie, dépend de la conception précise de ce dernier.

De nombreuses conceptions ont déjà été proposées.

Un première exemple de tendeur est proposé dans le document EP 0 926 396 A1 (D1).

La conception proposée dans D1 est particulièrement simple. Il en résulte un tendeur dont le coût de fabrication est faible.

Cependant, ses performances sont limitées.

En effet, dans D1, le déplacement du piston vers le fond de la chambre implique également un passage de fluide de la première chambre 35 vers la deuxième chambre 37. La force maximale générée par ce tendeur est donc limitée par cette fuite de fluide vers la deuxième chambre. Incidemment, la montée en pression est relativement lente. Une montée en pression est cependant bien effective du fait des pertes de charges générées par le passage du fluide.

Un tel tendeur n'est pas très bien adapté pour de nombreux véhicules automobiles, en particulier en raison des phénomènes d'acyclisme rencontrés sur les moteurs à combustion interne, à bas régime.

Des tendeurs plus performants existent.

C'est par exemple le cas dans le document EP 0 560 685 A1 (D2).

Dans D2, on propose un clapet installé en fond de chambre, entre le piston et l'orifice séparant les deux chambres. En phase de compression, le clapet est en position fermé. La montée est pression est donc plus rapide qu'avec le tendeur proposé dans D1. De plus, cela permet d'obtenir un niveau de pression et par suite une force maximale appliquée sur la courroie qui est plus importante qu'avec le tendeur du document D1.

Le tendeur du document D2 est donc plus performant que le tendeur du document D1. Il permet notamment de mieux gérer l'impact des phénomènes d'acyclisme du moteur à combustion interne sur la courroie.

Toutefois, le tendeur du document D2 est plus coûteux que le tendeur du document D1.

Un objectif de l'invention est de proposer un tendeur présentant les avantages précités sans en présenter les inconvénients.

Autrement dit, un objectif de l'invention est de proposer un tendeur de bonne performance, en particulier de performance améliorée par rapport au tendeur du document D1 et dont le coût reste réduit, en particulier par rapport au tendeur proposé dans le document D2.

Ceci peut notamment, mais pas uniquement, présenter un intérêt dans le cadre d'une rechange automobile.

En effet, au cours de la vie d'un véhicule automobile, il peut s'avérer que le tendeur doive être changé.

Si l'on souhaite obtenir une performance de bonne qualité, et compte tenu de la durée de vie restante globale du véhicule, on n'a alors pas nécessairement intérêt, sur le plan économique, à mettre en œuvre un tendeur du type de celui proposé dans le document D2.

Cet objectif est atteint par un tendeur pour courroie, le tendeur étant muni d'un axe longitudinal et comportant :
une première extrémité comportant une platine destinée à être solidarisée à un support fixe,
une deuxième extrémité, opposée à ladite première extrémité selon l'axe longitudinal du tendeur, la deuxième extrémité comportant une autre platine destinée à être solidarisée soit à un galet soit à un bras articulé équipé d'un galet, ledit galet étant destiné à être mis en contact avec la courroie,
une première chambre destinée à recevoir un fluide, la première chambre étant munie d'un fond,
une deuxième chambre agencée autour de la première chambre, la deuxième chambre étant également destinée à recevoir un fluide,
au moins un orifice de communication, pour le fluide, entre les deux chambres,
la première chambre comportant en outre un piston présentant une première extrémité solidarisée à la platine et une deuxième extrémité, opposée à la première extrémité selon l'axe longitudinal du tendeur, qui est destinée à être au contact du fluide, ledit piston étant apte à se déplacer le long de l'axe longitudinal du tendeur entre deux positions extrêmes de sorte à ne pas obstruer ledit au moins un orifice,
caractérisé en ce que la première chambre comprend, au niveau de son fond, une membrane déformable élastiquement dont une partie au moins est agencée en vis-à-vis de l'ensemble dudit au moins un orifice.

Le tendeur selon l'invention pourra comprendre d'autres caractéristiques, prises seules ou en combinaison :
- Il comprend un moyen de rappel élastique agencé entre les deux extrémités du tendeur ;
- la membrane présente une zone de recouvrement sur elle-même, ladite zone s'étendant sensiblement selon l'axe longitudinal du tendeur ;
- la zone de recouvrement définit un angle de recouvrement, pris dans un plan perpendiculaire à l'axe longitudinal du tendeur, ledit angle de recouvrement étant compris entre 5° et 180°;
- l'angle de recouvrement est compris entre 5° et 90°;
- ladite membrane est réalisée en un matériau choisi parmi : un matériau comportant du métal, un plastique, par exemple un thermoplastique ou un thermodurcissable, un thermoplastique élastomère ;
- ladite membrane est réalisée en acier, avec une épaisseur d'au moins 0,03mm ;
- la membrane se présente sous la forme d'un anneau présentant un axe de symétrie se confondant sensiblement avec l'axe longitudinal du tendeur, ledit anneau étant monté sur une face supérieure d'un support prévu dans la première chambre ;
- l'anneau présente une section circulaire ;
- l'anneau présente une face plane, orientée vers l'intérieur de la première chambre et inclinée par rapport à l'axe longitudinal du tendeur ;
- l'anneau présente une section triangulaire ;
- l'anneau est réalisé en élastomère ;
- ledit au moins un orifice présente un axe longitudinal, l'angle défini, selon le sens trigonométrique, entre l'axe longitudinal du tendeur et l'axe longitudinal dudit au moins un orifice étant un angle non nul, strictement inférieur à 90°.

La présente invention sera mieux comprise au moyen de la description ci-après et des figures annexées données comme des exemples non limitatifs et sur lesquels :
- la figure 1 est une vue en coupe longitudinale d'un tendeur conforme à l'invention ;
- la figure 2, qui comporte les figures 2(a) et 2(b), représente sur la figure 2(a), une vue agrandie, au niveau de la partie inférieure du tendeur de la figure 1 et, sur la figure 2(b) une vue en coupe selon un plan perpendiculaire à celui de la figure 1, le tout lors d'une phase de détente du tendeur ;
- la figure 3, qui comporte les figures 3(a) à 3(c), représente sur la figure 3(a), une vue agrandie, au niveau de la partie inférieure du tendeur de la figure 1 et, sur la figure 3(b) une vue en coupe selon un plan perpendiculaire à celui de la figure 1, le tout lors d'une phase de compression du tendeur, la figure 3(c) étant quant à elle conforme à la figure 3(b) mais permet de visualiser certains paramètres angulaires ;

- la figure 4 est une vue en perspective de la membrane employée dans le mode de réalisation illustré sur les figures 1 à 3 ;
- la figure 5 représente un autre type de membrane susceptible d'être employée en lieu et place de la membrane de la figure 4 ;
- la figure 6 représente un autre mode de réalisation dans lequel la membrane se présente sous la forme d'un anneau de section circulaire ;
- la figure 7 est une variante de réalisation de la figure 6, pour laquelle l'anneau présente une section triangulaire ;
- la figure 8 est une variante de réalisation, représentée avec un anneau conforme à celui de la figure 6, mais tout autant applicable au cas où l'anneau est conforme à celui de la figure 7 ;
- la figure 9 est une vue d'ensemble du tendeur 100 de la figure 1, avec son environnement.

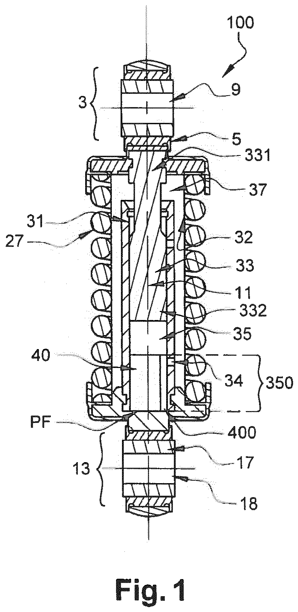

Sur la figure 1, le tendeur 100 selon l'invention est muni à une première extrémité 3 d'une platine 5 destinée à être solidarisée avec un support fixe (externe au tendeur, non représenté), par exemple le bloc moteur du moteur à combustion interne d'un véhicule automobile.

La platine 5 comporte au moins une ouverture 9 pour des moyens de fixation (non représentés) au support fixe.

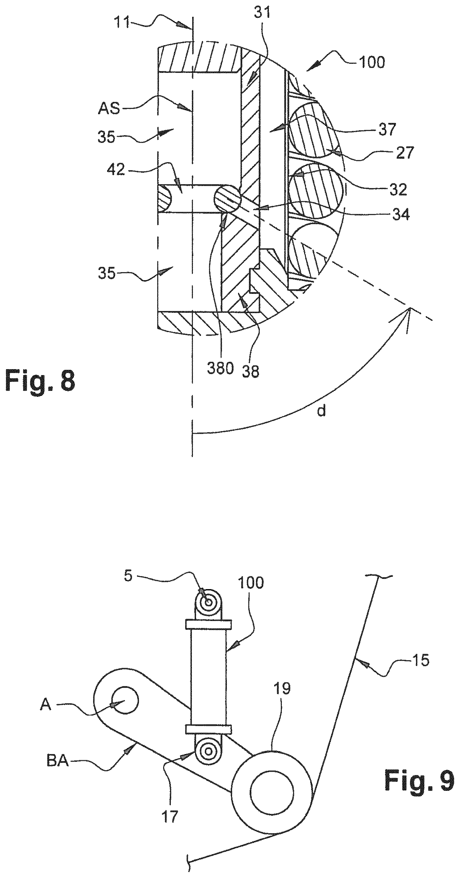

Le tendeur 100 comporte une deuxième extrémité 13 formée par une autre platine 17. La platine 17 comporte une ouverture 18 destinée à recevoir un galet, directement (non représenté), ou un bras articulé BA sur lequel un galet 19 est monté. La représentation de la figure 1 est d'ailleurs relative à cette deuxième possibilité, plus explicitement montrée sur la figure 9 où l'on peut notamment voir l'articulation A du bras articulé BA, par exemple par rapport au support fixe tel qu'un bloc moteur. Selon l'agencement, le galet est donc monté à rotation (sur un axe fixe) soit sur l'autre platine 17, soit sur le bras articulé BA. Le galet 19 est destiné à venir en contact avec la courroie 15.

Entre les deux extrémités 3, 13 du tendeur 100 selon l'invention, le tendeur 100 comporte un certain nombre de moyens. Ainsi, il est prévu une première chambre 35 délimitée par un cylindre 31 (le plus souvent de section circulaire) et un piston 33 apte à se déplacer dans le cylindre 31 selon l'axe longitudinal 11 du tendeur 100. Le piston 33 comporte une première extrémité 331 solidarisée à la platine 5 et une deuxième extrémité 332, opposée à la première extrémité 331 selon l'axe longitudinal 11 du tendeur 100, cette deuxième extrémité 332 étant destinée à être au contact du fluide.

Entre les deux extrémités 3, 13 du tendeur 100, il est également prévu une deuxième chambre 37, située autour de la première chambre 35 et délimitée par le cylindre 31 et une chemise 32, généralement souple, montée de manière étanche, entourant le cylindre 31.

Au moins un orifice 34, par exemple plusieurs orifices, est prévu au niveau du fond 350 de la première chambre 35, pour assurer un passage de fluide entre les deux chambres 35, 37.

Le fond 350 de la première chambre 35 est défini par la partie de la première chambre 35 qui comprend ledit au moins un orifice 34 et qui s'étend jusqu'au plan de fond PF de cette première chambre 35. Ce plan de fond PF est du côté de la deuxième extrémité 13 du tendeur 100.

Un moyen de rappel élastique 27, en l'occurrence un ressort hélicoïdal, contribue à aider le tendeur 100 lors d'une phase de détente. En l'occurrence, le moyen de rappel élastique est agencé autour de la chemise 32. Toutefois, en variante, ce moyen de rappel 27 pourrait se situer entre le cylindre 31 et la chemise 32, cette dernière se situant alors autour de la chemise 32.

Les extrémités 3, 13, le cylindre 31, la chemise 32 ainsi que le moyen de rappel élastique 27 sont avantageusement tous alignés selon l'axe longitudinal 11 du tendeur 100. Ainsi, la platine 5 se trouve à l'opposé, selon l'axe longitudinal 11, de l'autre platine 17.

Le tendeur 100 prévoit également une membrane 40, 41, 42, 43 déformable élastiquement dont une partie au moins est agencée en vis-à-vis de l'ensemble dudit au moins un orifice 34.

Cette membrane 40, 41, 42, 43 est installée au niveau du fond 350 de la première chambre 35.

La description qui précède est une base applicable à l'ensemble des modes de réalisation décrits.

Et par ailleurs, la présence d'une chemise 32, généralement souple, n'est pas obligatoire. En effet, on peut prévoir que le moyen de rappel élastique soit noyé dans un matériau à la fois étanche et élastique, par exemple un élastomère.

La membrane 40 peut être conçue de différentes façons.

Ainsi, sur les figures 1 à 3, la membrane se présente, lorsqu'elle n'est pas encore installée dans la première chambre 35, sous la forme d'un rectangle. Une fois cette membrane 40 installée dans la première chambre 35, celle-ci se conforme à la forme donnée par la circonférence interne de la première chambre 35. La membrane 40 peut reposer sur le plan de fond PF de la première chambre 35. En variante, on peut prévoir, au niveau du plan de fond PF de la première chambre 35. Une contre-forme (non représentée, non obligatoire) permettant de bloquer la membrane 40 peut être envisagée. Cela n'empêche alors pas pour autant un mouvement de la membrane au niveau de l'orifice 34, lequel est éloigné du plan de fond PF.

La membrane 40 présente une zone de recouvrement 400 sur elle-même, ladite zone de recouvrement s'étendant sensiblement selon l'axe longitudinal 11 du tendeur 100.

Pour former cette zone de recouvrement 400, il suffit que la longueur L de la membrane 40, en l'occurrence rectangulaire, présente une valeur strictement supérieure au périmètre interne de la première chambre 35.

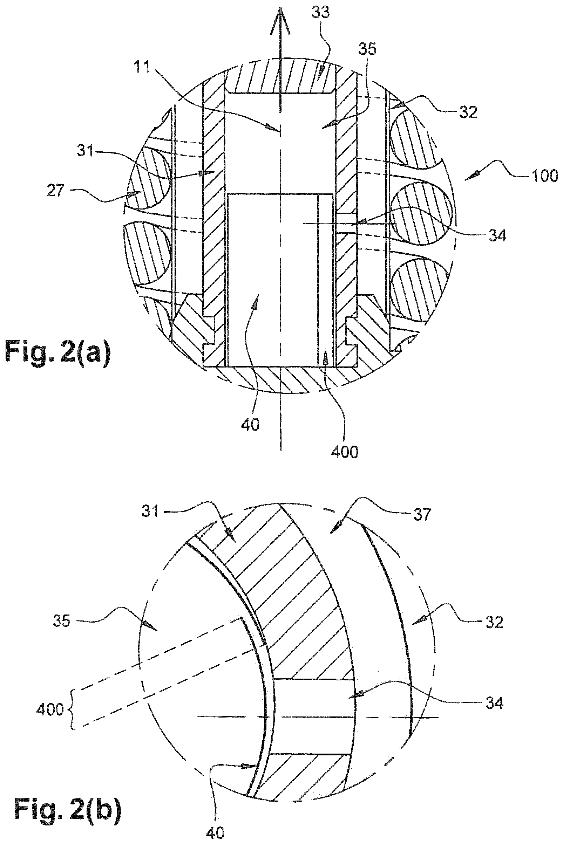

Comme on peut le constater sur les figures 2(b) (détente) et 3(b) (compression), la zone de recouvrement 400 présente un positionnement donné sur la circonférence interne de la première chambre 35.

Ce positionnement peut être représenté par un angle a, pris dans un plan perpendiculaire à l'axe longitudinal 11 du tendeur 100, et défini, dans le sens trigonométrique, entre l'axe longitudinal AO de l'orifice 34 et la droite D passant par le milieu de la zone de recouvrement 400.

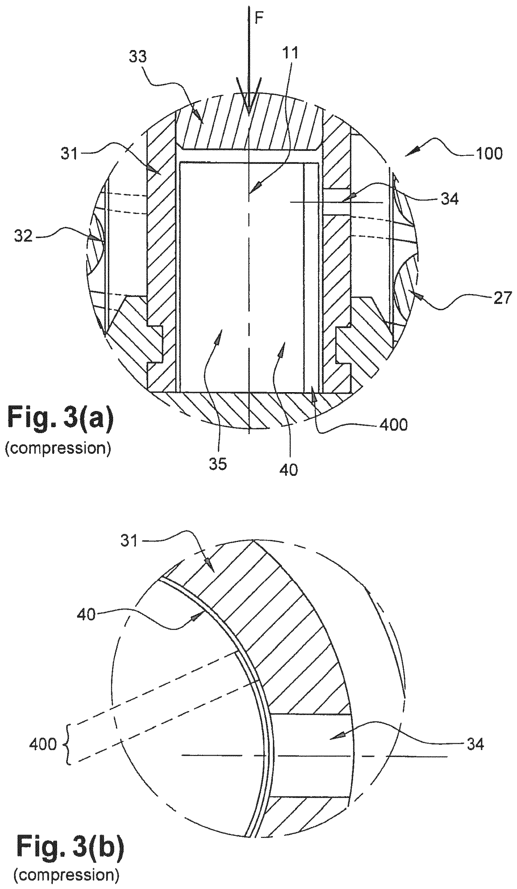

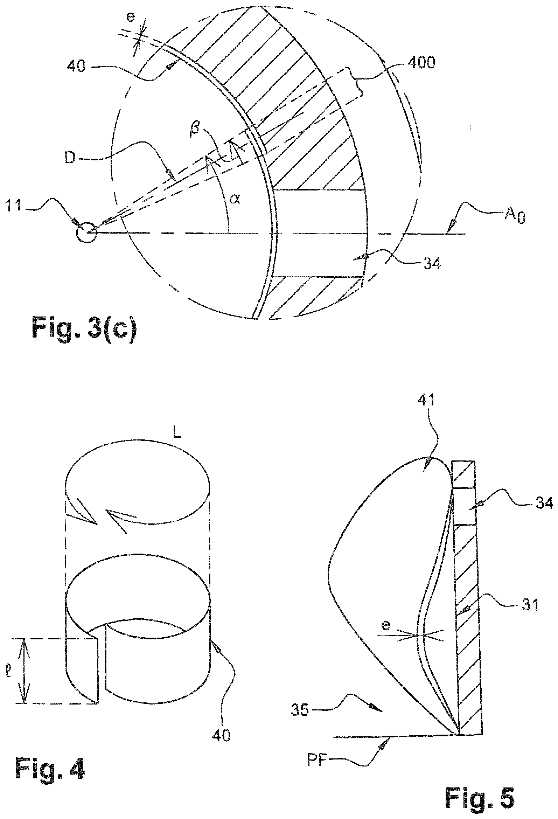

Cet angle α est représenté sur la figure 3 (c) .

Sur les figures 2(b) et 3(b), l'angle de positionnement α vaut approximativement 30°.

Par ailleurs, la zone de recouvrement 400 définit en elle-même un angle de recouvrement β, pris dans ce même plan perpendiculaire à l'axe longitudinal 11 du tendeur 100.

Cet angle β est également représenté sur la figure 3(c).

Sur les figures 2(b) et 3(b), l'angle de recouvrement β vaut approximativement 10°.

De manière générale, on note que lorsque la membrane 40 subit un effort de compression, ses caractéristiques d'élasticité lui permette, à un moment donné, de se plaquer contre la circonférence interne de la première chambre, à savoir contre le cylindre 31. De ce fait, l'orifice 34 est alors bouché et le fluide contenu dans la première chambre 35 ne peut plus passer vers la deuxième chambre 37 via l'orifice 34. Ceci permet une montée en pression dans la première chambre 35 du tendeur 100. Et lors d'une phase de détente, la membrane 40 subit moins de pression, ce qui permet à la membrane 40, en particulier au niveau de la zone de recouvrement 400, de s'écarter du cylindre 31. Le fluide contenu dans la deuxième chambre 35 peut alors passer vers la première chambre 35.

Plusieurs tests ont été effectués pour déterminer l'influence de l'angle de positionnement α et de l'angle de recouvrement β sur la performance du tendeur 100.

### Première série de tests :influence de l'angle de positionnement

Le tendeur 100 est celui de la figure 1, avec la membrane 40 associée. La première chambre présente une section circulaire, avec un diamètre interne de 10 mm. L'angle β de recouvrement a été fixé à β= 30°. Connaissant le diamètre interne de la première chambre 35 et l'angle de recouvrement, la longueur L de la membrane 40 rectangulaire est aisément déductible. En l'occurrence, cette longueur L vaut approximativement 34mm. Son épaisseur e, sensiblement constante, vaut 0,09mm. Enfin, la largeur l (correspondant à la hauteur prise selon l'axe longitudinal 11 du tendeur une fois la membrane 40 installée dans la première chambre 35) de la membrane 40 vaut approximativement 15mm (minimum, dans le cas d'espèce pour recouvrir l'orifice, compte tenu de la nature de la géométrie du tendeur testé). La membrane 40 est réalisée avec un acier inoxydable, nuance 1,4310 (X10CrNi18-8). Le piston est soumis à un déplacement de ±0,6mm à une fréquence de 24Hz. Par ailleurs, il n'y avait qu'un seul orifice, de section circulaire avec un diamètre de 2mm.

Dans les conditions décrites ci-dessus, plusieurs valeurs de l'angle α de positionnement ont été testées. Le tendeur est alors caractérisé par l'effort maximal Fₘₐₓ fourni lors de la phase de compression.

Les résultats sont présentés dans le tableau 1 ci-dessous.

**Tableau 1**

| α(°) | 0 | 90 | 180 |
|---|---|---|---|
| Fₘₐₓ (N) | 3140 | 3280 | 3100 |

Afin d'être utilisable pour les applications envisagées, l'effort maximal doit être au minimum de 2500 N. On constate donc que ce critère est atteint quelle que soit la valeur de l'angle α.

Par ailleurs, on note que la valeur de l'angle α de positionnement de la zone de recouvrement 400 ne change que faiblement la valeur de la force maximale obtenue.

De plus, il convient de noter que le tendeur du document EP 0 560 685 A1 (D2) a été testé dans les mêmes conditions (déplacement de ±0,6 mm du piston à 24Hz), la force maximale atteinte est alors de 3300N. Les valeurs fournies dans le tableau 1 sont proches.

Les résultats du tableau 1 montrent donc que, dans le cadre de l'invention, on définit une solution à la fois simple, moins coûteuse que celle du document D2 et par ailleurs dont la performance est tout à fait intéressante.

Une deuxième série de tests a été effectuée pour déterminer l'influence de l'angle β de recouvrement sur la performance du tendeur selon l'invention.

### Deuxième série de tests :influence de l'angle de recouvrement

Ici, les conditions sont les mêmes que pour la première série de tests. Cependant, l'angle de positionnement a été fixé pour l'ensemble des tests effectués ici, en l'occurrence à une valeur non contrôlée, dans la mesure où son impact est faible (cf. tableau 1 ci-dessus).

Les résultats sont fournis dans le tableau 2 ci-dessous.

**Tableau 2**

| β(°) | 10 | 40 | 60 |
|---|---|---|---|
| Fₘₐₓ (N) | 2770 | 3140 | 3550 |

Il est intéressant de relever que la performance du tendeur selon l'invention est sensible à l'angle α de recouvrement.

Plus précisément, il apparaît, au moins dans la gamme testée, que plus l'angle β est grand et plus la force maximale Fₘₐₓ obtenue en phase de compression est importante.

On note même que pour l'angle β de 60°, les performances sont meilleures que celles obtenues avec le tendeur du document D2.

Compte tenu des résultats fournis dans les tableaux 1 et 2, l'angle α de positionnement peut être quelconque, mais notamment compris entre 0° et 180° et l'angle β de recouvrement pourra être compris entre 5° et 180°, notamment entre 5° et 90°.

D'autres tests ont été effectués.

### Autres tests

Ces autres tests ont été effectués dans les conditions des premiers tests (en particulier avec β= 30°, mais sans vérification de l'angle exacte de l'angle α de positionnement, compte tenu des résultats du tableau 1).

Le seul paramètre qui a été changé concerne l'épaisseur de la membrane 40.

En premier lieu, l'épaisseur de la membrane 40 a été fixée à 0,05mm (au lieu de 0,09mm dans les premiers tests).

Dans ces conditions, la force maximale Fₘₐₓ a été mesurée à 2500 N.

En diminuant l'épaisseur de la membrane 40, on constate donc que l'effort maximal atteint diminue également. Compte tenu de la membrane considérée (géométrie, nature du matériau définissant un certain module d'Young) dans les différents tests, on comprend donc que l'épaisseur de 0,05mm définit une valeur minimale pour obtenir une performance acceptable du tendeur.

Il pourrait bien entendu en être autrement en fonction de la géométrie et de la nature du matériau formant la membrane.

En deuxième lieu, il a été souhaité de tester les performances du tendeur avec une épaisseur de membrane 40 fixée à 0,13mm (au lieu de 0,09mm dans les premiers tests) .

Il s'est avéré que la membrane était alors trop rigide pour pouvoir être insérée correctement dans la première chambre 35.

Il pourrait bien entendu en être autrement en fonction de la géométrie et de la nature du matériau formant la membrane, mais aussi de la géométrie du tendeur (notamment du diamètre de la première chambre).

Dans le cadre des tests effectués, une épaisseur de la membrane comprise entre 0,05mm et 0,11mm est donc adaptée au résultat recherché.

En variante, il est possible de ne prévoir aucun recouvrement. Dans ce cas, les deux extrémités de la membrane sont séparées par une fente qui ne peut pas être positionnée en vis-à-vis de l'orifice afin d'assurer qu'une partie au moins de ladite membrane 40 soit agencée en vis-à-vis de l'ensemble dudit au moins un orifice 34.

Sur la figure 5, on montre un autre type de membrane 41 pouvant être utilisé en lieu et place de la membrane 40 représentée sur les figures 1 à 4. La membrane 41 est une membrane en forme de cercle lorsqu'elle n'est pas encore mise dans la première chambre 35 du tendeur 100. Une fois installée dans la première chambre 35, la forme est sensiblement elliptique ou en forme de chips. Afin que la membrane 41 tienne en position en utilisation, il est avantageux de prévoir une contre-forme (non représentée), au niveau du plan de fond PF de la première chambre 35, dans laquelle la membrane 41 peut être bloquée.

La membrane 40, 41 peut être réalisée en un matériau comportant du métal, un plastique, par exemple un thermoplastique ou un thermodurcissable, ou un thermoplastique élastomère. Lorsqu'elle comporte un métal, on peut choisir le bronze, le laiton, le cuivre, l'aluminium, ou encore un acier.

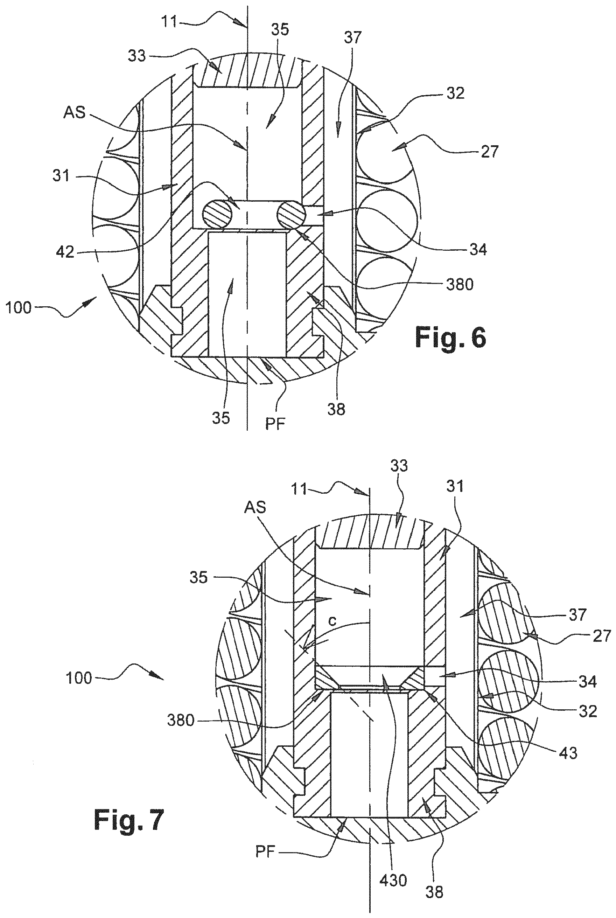

Sur les figures 6 et 7, on a représenté un autre mode de réalisation.

Sur ces figures, la membrane 42, 43 se présente sous la forme d'un anneau présentant un axe de symétrie AS se confondant sensiblement avec l'axe longitudinal 11 du tendeur 100. L'anneau 42, 43 est par ailleurs monté sur une face supérieure 380 d'un support 38 prévu dans la première chambre 35. Ce support 38 permet de faire en sorte que l'anneau puisse faire face à l'ensemble de l'orifice.

Sur la figure 6, l'anneau 42 présente une section circulaire. Il peut notamment s'agir d'un joint torique, par exemple réalisé en élastomère.

Sur la figure 7, l'anneau 43 présente une face 430 plane, orientée vers l'intérieur de la première chambre 35 et inclinée par rapport à l'axe longitudinal 11 du tendeur 100. Autrement dit, l'angle c formé, dans le sens trigonométrique, entre l'axe longitudinal 11 du tendeur 100 et la direction donnée par la face plane 430 de l'anneau 43 forme un angle non nul. Ainsi, lors d'une phase de compression, la pression exercée par le fluide contenu dans la première chambre 35, laquelle s'exerce essentiellement selon la direction donnée par l'axe longitudinal 11 du tendeur 100 se traduit, au niveau de l'anneau 43 non seulement par une composante de force verticale qui maintient l'anneau 43 contrer le support 38, mais aussi par une composante radiale plaquant l'anneau 43 contre la circonférence interne de la chambre 35, et donc contre l'orifice de passage 34 entre les deux chambres 35, 37.

Cet effet existe également avec l'anneau 42 de la figure 6, mais, pour une même pression appliquée, l'effort radial subi par l'anneau 43 est plus important que celui subi par l'anneau 42.

Ainsi et par exemple, l'anneau 43 pourra présenter une section triangulaire. C'est le cas sur la figure 7.

Enfin, sur la figure 8, on a représenté une autre variante de réalisation de l'invention.

Celle-ci est représentée avec l'anneau 42 de la figure 6, mais s'applique tout autant à l'anneau 43 de la figure 7.

Ici, ledit au moins un orifice 34 présente un axe longitudinal AO, l'angle d défini, selon le sens trigonométrique, entre l'axe longitudinal 11 du tendeur 100 et l'axe longitudinal AO dudit au moins un orifice 34 étant un angle non nul, strictement inférieur à 90°.

Ceci facilite la soulevée de l'anneau 42, 43 lors d'une phase de détente du tendeur 100. Le passage du fluide de la deuxième chambre vers la première chambre est ainsi amélioré, ce qui permet d'augmenter les performances globales du tendeur 100, notamment son temps de réaction.

L'anneau 42, 43 est avantageusement réalisé en élastomère. On peut aussi envisager un thermoplastique élastomère.

## Revendications

1. Tendeur (100) pour courroie, le tendeur (100) étant muni d'un axe longitudinal (11) et comportant :
une première extrémité (3) comportant une platine (5) destinée à être solidarisée à un support fixe,
une deuxième extrémité (13), opposée à ladite première extrémité (3) selon l'axe longitudinal (11) du tendeur (100), la deuxième extrémité comportant une autre platine (17) destinée à être solidarisée soit à un galet soit à un bras articulé (BA) équipé d'un galet (19), ledit galet étant destiné à être mis en contact avec la courroie,
une première chambre (35) destinée à recevoir un fluide, la première chambre (35) étant munie d'un fond (350),
une deuxième chambre (37) agencée autour de la première chambre (35), la deuxième chambre (37) étant également destinée à recevoir un fluide,
au moins un orifice (34) de communication, pour le fluide, entre les deux chambres (35, 37),
la première chambre (35) comportant en outre un piston (33) présentant une première extrémité (331) solidarisée à la platine (5) et une deuxième extrémité (332), opposée à la première extrémité (331) selon l'axe longitudinal (11) du tendeur (100), qui est destinée à être au contact du fluide, ledit piston (33) étant apte à se déplacer le long de l'axe longitudinal (11) du tendeur (100) entre deux positions extrêmes de sorte à ne pas obstruer ledit au moins un orifice (34),
**caractérisé en ce que** la première chambre (35) comprend, au niveau de son fond (350), une membrane (40, 41, 42, 43) déformable élastiquement dont une partie au moins est agencée en vis-à-vis de l'ensemble dudit au moins un orifice (34).

2. Tendeur (100) selon la revendication 1, comportant également un moyen de rappel élastique (27) agencé entre les deux extrémités (3, 13) du tendeur (100) .

3. Tendeur (100) selon l'une des revendications précédentes, dans lequel la membrane (40) présente une zone (400) de recouvrement sur elle-même, ladite zone s'étendant sensiblement selon l'axe longitudinal (11) du tendeur (100).

4. Tendeur (100) selon la revendication précédente, dans lequel la zone de recouvrement (400) définit un angle de recouvrement, pris dans un plan perpendiculaire à l'axe longitudinal (11) du tendeur (100), ledit angle de recouvrement étant compris entre 5° et 180°.

5. Tendeur (100) selon la revendication précédente, dans lequel l'angle de recouvrement est compris entre 5° et 90°.

6. Tendeur (100) selon l'une des revendications 3 à 5, dans lequel ladite membrane (40) est réalisée en un matériau choisi parmi : un matériau comportant du métal, un plastique, par exemple un thermoplastique ou un thermodurcissable, un thermoplastique élastomère.

7. Tendeur (100) selon l'une des revendications 3 à 6, dans lequel ladite membrane (41, 42) est réalisée en acier, avec une épaisseur d'au moins 0,03mm.

8. Tendeur (100) selon l'une des revendications 1 ou 2, dans lequel la membrane se présente sous la forme d'un anneau (42, 43) présentant un axe de symétrie (AS) se confondant sensiblement avec l'axe longitudinal (11) du tendeur, ledit anneau étant monté sur une face supérieure (380) d'un support (38) prévu dans la première chambre (35).

9. Tendeur (100) selon la revendication précédente, dans lequel l'anneau (42) présente une section circulaire.

10. Tendeur (100) selon la revendication 8, dans lequel l'anneau (43) présente une face (430) plane, orientée vers l'intérieur de la première chambre (35) et inclinée par rapport à l'axe longitudinal (11) du tendeur.

11. Tendeur (100) selon la revendication précédente, dans lequel l'anneau (43) présente une section triangulaire.

12. Tendeur (100) selon l'une des revendication 8 à 11, dans lequel l'anneau (42, 43) est réalisé en élastomère.

13. Tendeur (100) selon l'une des revendications 8 à 12, dans lequel ledit au moins un orifice (34) présente un axe longitudinal (AO), l'angle défini, selon le sens trigonométrique, entre l'axe longitudinal (11) du tendeur (100) et l'axe longitudinal (AO) dudit au moins un orifice étant un angle non nul, strictement inférieur à 90°.

## Patentansprüche

1. Spanner (100) für Riemen, wobei der Spanner (100) mit einer Längsachse (11) versehen ist und umfasst:
ein erstes Ende (3), das eine Platte (5) umfasst, die dazu vorgesehen ist, mit einer festen Stütze fest verbunden zu sein,
ein zweites Ende (13), das dem ersten Ende (3) gemäß der Längsachse (11) des Spanners (100) gegenüberliegt, wobei das zweite Ende eine weitere Platte (17) umfasst, die dazu vorgesehen ist, entweder mit einer Rolle oder mit einem Gelenkarm (BA), der mit einer Rolle (19) ausgestattet ist, fest verbunden zu sein, wobei die Rolle dazu vorgesehen ist, mit dem Riemen in Kontakt gebracht zu werden,
eine erste Kammer (35), die dazu vorgesehen ist, ein Fluid zu empfangen, wobei die erste Kammer (35) mit einem Boden (350) versehen ist,
eine zweite Kammer (37), die um die erste Kammer (35) herum eingerichtet ist, wobei die zweite Kammer (37) ebenfalls dazu vorgesehen ist, ein Fluid zu empfangen,
mindestens eine Öffnung (34) zur Kommunikation, für das Fluid, zwischen den zwei Kammern (35, 37),
wobei die erste Kammer (35) weiter einen Kolben (33) umfasst, der ein erstes Ende (331), das fest mit der Platte (5) verbunden ist, und ein dem ersten Ende (331) gemäß der Längsachse (11) des Spanners (100) gegenüberliegendes, zweites Ende (332) umfasst, das dazu vorgesehen ist, mit dem Fluid in Kontakt zu sein, wobei der Kolben (33) dazu angepasst ist, sich entlang der Längsachse (11) des Spanners (100) derart zwischen zwei extremen Positionen zu bewegen, dass er die mindestens eine Öffnung (34) nicht versperrt,
**dadurch gekennzeichnet, dass** die erste Kammer (35) an ihrem Boden (350) eine elastisch verformbare Membran (40, 41, 42, 43) umfasst, bei der mindestens ein Teil der Gesamtheit der mindestens einen Öffnung (34) zugewandt eingerichtet ist.

2. Spanner (100) nach Anspruch 1, ebenfalls ein elastisches Rückholmittel (27) umfassend, das zwischen den zwei Enden (3, 13) des Spanners (100) eingerichtet ist.

3. Spanner (100) nach einem der vorstehenden Ansprüche, wobei die Membran (40) einen sich selbst überlappenden Bereich (400) aufweist, wobei sich der Bereich im Wesentlichen gemäß der Längsachse (11) des Spanners (100) erstreckt.

4. Spanner (100) nach dem vorstehenden Anspruch, wobei der Überlappungsbereich (400) einen Überlappungswinkel definiert, in einer Ebene senkrecht zur Längsachse (11) des Spanners (100) genommen, wobei der Überlappungswinkel zwischen 5° und 180° beträgt.

5. Spanner (100) nach dem vorstehenden Anspruch, wobei der Überlappungswinkel zwischen 5° und 90° beträgt.

6. Spanner (100) nach einem der Ansprüche 3 bis 5, wobei die Membran (40) aus einem Material gefertigt ist, das ausgewählt ist aus: einem Metall umfassenden Material, einem Kunststoff, beispielsweise einem Thermoplast oder einem Duroplast, einem elastomeren Thermoplast.

7. Spanner (100) nach einem der Ansprüche 3 bis 6, wobei die Membran (41, 42) aus Stahl gefertigt ist, mit einer Dicke von mindestens 0,03 mm.

8. Spanner (100) nach einem der Ansprüche 1 bis 2, wobei die Membran die Form eines Rings (42, 43) annimmt, der eine Symmetrieachse (AS) aufweist, die im Wesentlichen mit der Längsachse (11) des Spanners zusammenfällt, wobei der Ring auf einer oberen Fläche (380) einer in der ersten Kammer (35) bereitgestellten Stütze (38) befestigt ist.

9. Spanner (100) nach dem vorstehenden Anspruch, wobei der Ring (42) einen ringförmigen Abschnitt aufweist.

10. Spanner (100) nach Anspruch 8, wobei der Ring (43) eine ebene Fläche (430) aufweist, die zum Inneren der ersten Kammer (35) ausgerichtet ist und in Bezug auf die Längsachse (11) des Spanners geneigt ist.

11. Spanner (100) nach dem vorstehenden Anspruch, wobei der Ring (43) einen dreieckigen Abschnitt aufweist.

12. Spanner (100) nach einem der Ansprüche 8 bis 11, wobei der Ring (42, 43) aus Elastomer gefertigt ist.

13. Spanner (100) nach einem der Ansprüche 8 bis 12, wobei die mindestens eine Öffnung (34) eine Längsachse (AO) aufweist, wobei der, im trigonometrischen Sinne, definierte Winkel zwischen der Längsachse (11) des Spanners (100) und der Längsachse (AO) der mindestens einen Öffnung ein Winkel ungleich null, streng kleiner als 90° ist.

## Claims

1. Belt tensioner (100), the tensioner (100) being provided with a longitudinal axis (11) and comprising:
a first end (3) comprising a plate (5) intended to be secured to a fixed support,
a second end (13), opposite said first end (3) along the longitudinal axis (11) for the tensioner (100), the second end comprising another plate (17) intended to be secured either to a roller or to an articulated arm (BA) equipped with a roller (19), said roller being intended to be put into contact with the belt,
a first chamber (35) intended to receive a fluid, the first chamber (35) being provided with a bottom (350),
a second chamber (37) arranged around the first chamber (35), the second chamber (37) also being intended to receive a fluid,
at least one communication opening (34), for the fluid, between the two chamber (35, 37),
the first chamber (35) further comprising a piston (33) having a first end (331) secured to the plate (5) and a second end (332), opposite the first end (331) along the longitudinal axis (11) of the tensioner (100), which is intended to be in contact with the fluid, said piston (33) being able to move along the longitudinal axis (11) of the tensioner (100) between two extreme positions so as to not obstruct said at least one opening (34),
**characterised in that** the first chamber (35) comprises, at its bottom (350), α membrane (40, 41, 42, 43) elastically deformable of which at least one portion is arranged opposite the whole of said at least one opening (34).

2. Tensioner (100) according to claim 1, also comprising an elastic return means (27), arranged between the two ends (3, 13) of the tensioner (100).

3. Tensioner (100) according to one of the preceding claims, wherein the membrane (40) has a zone (400) overlapping on itself, said zone extending substantially along the longitudinal axis (11) of the tensioner (100).

4. Tensioner (100) according to the preceding claim, wherein the overlapping zone (400) defines an overlap angle, taken in a plane perpendicular to the longitudinal axis (11) of the tensioner (100), said overlap angle being comprised between 5° and 180°.

5. Tensioner (100) according to the preceding claim, wherein the overlap angle is comprised between 5° and 90°.

6. Tensioner (100) according to one of claims 3 to 5, wherein said membrane (40) is made of a material selected from among: a material comprising metal, a plastic, for example a thermoplastic or a thermoset, an elastomer thermoplastic.

7. Tensioner (100) according to one of claims 3 to 6, wherein said membrane (41, 42) is made of steel, with a thickness of at least 0.03mm.

8. Tensioner (100) according to one of claims 1 or 2, wherein the membrane is presented in the form of a ring (42, 43) having an axis of symmetry (AS) being combined substantially with the longitudinal axis (11) of the tensioner, said ring being mounted on an upper face (380) of a support (38) provided in the first chamber (35).

9. Tensioner (100) according to the preceding claim, wherein the ring (42) has a circular cross-section.

10. Tensioner (100) according to claim 8, wherein the ring (43) has a flat face (430), oriented towards the inside of the first chamber (35) and inclined with respect to the longitudinal axis (11) of the tensioner.

11. Tensioner (100) according to the preceding claim, wherein the ring (43) has a triangular cross-section.

12. Tensioner (100) according to one of claims 8 to 11, wherein the ring (42, 43) is made of elastomer.

13. Tensioner (100) according to one of claims 8 to 12, wherein said at least one opening (34) has a longitudinal axis (AO), the angle defined, along the trigonometric direction, between the longitudinal axis (11) of the tensioner (100) and the longitudinal axis (AO) of said at least one opening being a non-zero angle, strictly less than 90°.
